# EUROPEAN PATENT SPECIFICATION

(11) **EP 3 729 479 B1**
(45) Date of publication and mention of the grant of the patent: **25.06.2025**
(21) Application number: 18819021.9
(22) Date of filing: 05.12.2018
(51) Int. Cl.: H01F 7/02, H01F 7/16, H01F 7/06

(54) **ACTUATOR COMPRISING ELECTRO PERMANENT MAGNET AND METHOD**
AKTUATOR MIT ELEKTROPERMANENTMAGNET UND VERFAHREN
ACTIONNEUR COMPRENANT UN AIMANT ÉLECTROPERMANENT ET PROCÉDÉ

(30) Priority: 19.12.2017 SE 1751574
(43) Date of publication of application: 28.10.2020
(73) Proprietor: Assa Abloy AB, 107 23 Stockholm (SE)
(72) Inventor: ELSMARK, Lars, 132 37 SALTSJÖ-BOO (SE)
(74) Representative: Kransell & Wennborg KB
(86) International application number: PCT/EP2018/083591
(87) International publication number: WO 2019/121000

(56) References cited:
- EP-A2- 2 284 340
- WO-A1-2016/075571
- DE-C1- 19 639 545
- US-A- 4 306 207
- US-A- 5 677 821
- US-A1- 2012 299 315
- ABEYWARDANA D K ET AL: "Electropermanent magnet based wireless microactuator for microfluidic systems: Actuator control and energy consumption aspects", 2016 IEEE SENSORS, IEEE, 30 October 2016 (2016-10-30), pages 1 - 3, XP033036695, DOI: 10.1109/ICSENS.2016.7808426

## Description

### Technical Field

The present disclosure generally relates to actuators comprising a soft magnet. In particular, an actuator comprising a soft magnet and a movable member arranged to move between a first position and a second position, lock devices comprising the actuator, a handle device comprising the actuator and a method for operating the actuator, are provided.

### Background

Various types of actuators may be used in lock devices. One type of powered actuator is a motor that rotates a drive shaft, which requires power to both lock and unlock a lock device, for example an electric strike. Another type of powered actuator is a solenoid which has a plunger that moves relative to a housing in response to power being supplied. Such solenoids are typically provided with a spring to return the plunger to its original position without power. The solenoid includes a coil and a shaft which is axially movable within the coil. The coil is energized by connection to a source of electrical current and thereby generates magnetic flux which influences the shaft to move in one direction. When the coil is de-energized, the spring operates to move the shaft in the reverse direction. One advantage with solenoids over motors is that in a power failure event, the plunger can still return to its original position.

US 2012299315 A1 discloses a structure for electrical locks comprising two rotational members, a latching assembly and a controlling means. The two rotational members are respectively secured to two handles of a door. The latching assembly includes a cartridge, a sliding element and a dividing rod. The dividing rod is fitted in the cartridge to define two lateral zones respectively corresponding to two recesses of the rotational members. The sliding member is slidably fitted in one of the lateral zones of the cartridge.

The controlling means includes a pushing assembly and a solenoid. When the solenoid is de-energized, the pushing assembly can be moved forward to lock a respective handle. When the solenoid is energized, the pushing assembly can be moved back to free the respective handle.

Reference 1 discloses a wireless microactuator for microfluidic microvalves. The actuator comprises hard and semi-hard magnetic materials combined to form a controllable electropermanent magnet. The wireless power capability is achieved using inductive power transfer and the link is utilized to deliver a binary open/close signal to the actuator.

Reference 1: ABEYWARDANA D K ET AL: "Electropermanent magnet based wireless microactuator for microfluidic systems: Actuator control and energy consumption aspects", 2016 IEEE SENSORS, IEEE, 30 October 2016 (2016-10-30), pages 1-3, XP033036695, DOI: 10.1109/ICSENS.2016.7808426

US 4306207 A discloses a self-sustaining solenoid 1. A self-sustaining solenoid comprising an operating coil, a return coil, a moving iron core, a fixed receiver, a magnetic yoke, a projection, a recess and a permanent magnet. The permanent magnet is magnetized by an operating magnetic field set up by an operating current supplied to the operating coil and substantially completely demagnetized by a return magnetic field established by a return current supplied to the return coil.

EP 2284340 A2 discloses a magnetic catch for closure of an opening. The catch has magnets attached to a fixed part, where the magnets sealed with a yoke comprise a permanent magnet. Magnetic field closure is generated within the former magnets by switching magnets that connect pole shoes of the former magnets.

DE 19639545 C1 discloses an electromagnetic locking device for a cylinder lock. The device has axially spaced recesses on its outer surface which are engaged by spring-loaded balls fixed into a housing. The axial separation of the balls is selected so that a locking ring is held in both end positions.

US 5677821 A discloses a method and device for detecting full magnetization of an electro-permanent magnet which includes at least one permanent magnet part and at least one coil. Current is passed through the coil over a certain period of time in order to magnetize the electro-permanent magnet. The current through the coil of the magnet is measured during magnetization, and an increase of the derivative of the current curve is detected. A signal is given to an operator or computer if an increase in the current derivative is detected, which indicates full magnetization of the electro-permanent magnet.

WO 2016075571 A1 discloses a bistable actuator comprising two magnets interconnected through a central rod, which acts as a plunger connecting the at least two magnets and moves the at least two magnets as a single body. The surfaces of the two magnets facing each other have same polarity. Also, the bistable actuator comprises at least one soft magnet configured around the central rod between the two magnets.

### Summary

One object of the present disclosure is to provide an actuator having a low power consumption.

A further object of the present disclosure is to provide an actuator having a small size.

A still further object of the present disclosure is to provide an actuator having a reliable operation.

A still further object of the present disclosure is to provide an actuator having a simple design.

A still further object of the present disclosure is to provide an actuator having a good protection against tampering.

A still further object of the present disclosure is to provide an actuator that is efficient, i.e. has a high magnetic holding force relative to its size.

A still further object of the present disclosure is to provide an actuator solving two or more of the foregoing objects.

A still further object of the present disclosure is to provide a lock device comprising an actuator solving one, several or all of the foregoing objects.

A still further object of the present disclosure is to provide a handle device comprising an actuator solving one, several or all of the foregoing objects.

A still further object of the present disclosure is to provide a method for operating an actuator solving one, several or all of the foregoing objects.

According to one aspect, there is provided an actuator according to claim 1.

When a current pulse of a certain duration and level is applied to the coil wound around the soft magnet, the magnetic field generated by the current pulse flips the polarity of the soft magnet. Once the soft magnet has been flipped from the first polarity to the second polarity, the permanent magnet and the soft magnet combine to generate an electric field. This electric field acts on the magnetic target section of the movable member (e.g. by means of an attractive or repulsive force) such that the movable member moves from the first position to the second position. Once the polarity of the soft magnet has been switched from the first polarity to the second polarity and the movable member has moved from the first position to the second position, the electric field generated by the permanent magnet and the soft magnet in combination may hold the movable member in the second position without power supply. The first position and the second position may constitute distinct positions for the movable member.

Throughout the present disclosure, the base section may be constituted by a stationary structure. According to one variant, the actuator comprises two pole pieces, one permanent magnet and one soft magnet arranged between the two pole pieces. In this case, the base section may be constituted by the permanent magnet, the soft magnet and the two pole pieces. The base section may however comprise further components. The movable member may comprise an elongated portion and a head portion and the magnetic target section may be constituted by, or arranged in, the head portion.

The soft magnet is hollow, e.g. cylindrical or substantially cylindrical. The movable member is arranged to move within the soft magnet. Also the permanent magnet and/or the pole pieces may be hollow. According to one example, the base section comprises an outer cylindrical soft magnet, an inner cylindrical permanent magnet and two circular pole pieces attached to the respective ends of the soft magnet and the permanent magnet. In this case, the coil may be wound around the soft magnet and the movable member may be guided within the soft magnet, the permanent magnet, the pole pieces and the coil. The base section may thus be generally cylindrical and may have an outer diameter of only a few millimeters, such as maximum 5 millimeters.

The actuator according to the present disclosure may be referred to as a low power actuator. The actuator may for example be constituted by an actuator for a lock device, such as a lock cylinder, a lock case or a strike assembly, or for a handle device for operating doors, windows and the like. Other implementations are conceivable.

The soft magnet has lower coercivity than the permanent magnet. Throughout the present disclosure, the soft magnet may alternatively be referred to as a switching magnet and the permanent magnet may alternatively be referred to as a hard magnet. The magnetically hard material may for example comprise a Neodymium alloy such as a Neodymium-Iron-Boron (NdFeB), or other alloy having a relatively high intrinsic coercivity. The magnetically soft material may for example comprise an Alnico alloy, Iron-Cobalt-Vanadium, or other alloy having a relatively low intrinsic coercivity. The permanent magnet and the soft magnet may collectively be referred to as a dual material permanent magnet.

When the soft magnet adopts the second polarity, the movable member may be arranged to move to the second position due to either an attractive magnetic force or a repulsive magnetic force. The actuator further comprises a resetting element configured to move the movable member to the first position when the soft magnet adopts the first polarity, or the movable member is forced towards the first position or towards the second position by means of gravity.

The resetting element may be constituted by an elastic element. In this case, the actuator may be configured such that the magnetic field, generated by the permanent magnet and the soft magnet in combination and acting on the magnetic target section when the soft magnet adopts the second polarity, moves the movable member to the second position and deforms the elastic element. The deformation of the elastic element may be either a compression or an extension. For example, the elastic element may be compressed a smaller amount when the movable member adopts the first position and may be compressed a larger amount when the movable member adopts the second position. Alternatively, the elastic element may be extended a smaller amount when the movable member adopts the first position and may be extended a larger amount when the movable member adopts the second position.

The elastic element may be fixed to the base section, or to a section fixed with respect to the base section, and to the movable member, or to a section fixed with respect to the movable member. The elastic element may for example be constituted by a spring, such as a coil spring, or by a rubber component.

The actuator may further comprise a first mechanical stop defining the first position of the movable member relative to the base section. The first mechanical stop may for example be constituted by a protrusion, such as a collar, on the elongated portion of the movable member, that engages with the base section. Alternatively, the first mechanical stop may be constituted by a profile, such as an inclined surface, on the head portion of the movable member, that engages with the base section.

The actuator may further comprise a second mechanical stop defining the second position of the movable member relative to the base section. The second mechanical stop may also be constituted by a profile, such as an inclined surface, on the head portion of the movable member, that engages with the base section. Alternatively, the second mechanical stop may also be constituted by a protrusion, such as a collar, on the elongated portion of the movable member, that engages with the base section.

The movable member may be arranged to move substantially linearly, or linearly, relative to the base section between the first position and the second position. Other movement paths of the movable member, including for example curved movement paths, are conceivable.

A magnetic field outside the base section may be substantially neutral, or neutral, when the soft magnet adopts the first polarity. In the variant comprising a first soft magnet arranged in a first base section and a second soft magnet arranged in a second base section, the magnetic field outside the first base section may be substantially neutral when the first soft magnet adopts the first polarity and the magnetic field outside the second base section may be substantially neutral when the second soft magnet adopts the first polarity.

The permanent magnet and the soft magnet may be polarized in the same direction when the soft magnet adopts the second polarity. The actuator may further comprise a battery for powering the power controller. An external power supply may alternatively be employed for supplying electrical power to the power controller. In case the actuator comprises a first soft magnet arranged in a first base section and a second soft magnet arranged in a second base section, one power controller may be associated with each soft magnet or one common power controller may be used in common.

An actuator according to claim 8 is also provided. The actuator according to this variant may comprise two elastic elements. A first elastic element may be configured to force the movable member to the first position and a second elastic element may be configured to force the movable member to the second position. For example, when the movable member moves to the first position, the first elastic element may be compressed a smaller amount and the second elastic element may be compressed a larger amount and when the movable member moves to the second position, the first elastic element may be compressed a larger amount and the second elastic element may be compressed a smaller amount. A reverse configuration (i.e. by using extension forces of the elastic elements) is also possible. The two elastic elements thus provide a balancing effect on the movable member and thus facilitates the movement of the movable member between the first position and the second position.

The first elastic element may be fixed to the first base section, or to a section fixed with respect to the first base section, and to the movable member, or to a section fixed with respect to the movable member. The second elastic element may be fixed to the second base section, or to a section fixed with respect to the second base section, and to the movable member, or to a section fixed with respect to the movable member. Each elastic element may for example be constituted by a spring, such as a coil spring, or by a rubber component.

According to an alternative example, the actuator according to this variant does not comprise any elastic element for moving the movable member. In this case, the movable member may move from the first position to the second position only due to the magnetic field generated by the first permanent magnet and the first soft magnet in combination with the first soft magnet adopts the second polarity.

Furthermore, in this variant, the second soft magnet may be switched from the second polarity to the first polarity at the same time, or at substantially the same time, as the first soft magnet is switched from the first polarity to the second polarity.

The first base section may for example comprise two first pole pieces and the first permanent magnet and the first soft magnet may be arranged between the two first pole pieces. The second base section may for example comprise two second pole pieces and the second permanent magnet and the second soft magnet may be arranged between the two pole pieces. In this case, the first base section may be constituted by the first permanent magnet, the first soft magnet and the two first pole pieces and the second base section may be constituted by the second permanent magnet, the second soft magnet and the two second pole pieces.

Each of the first soft magnet and the second soft magnet is hollow, e.g. cylindrical or substantially cylindrical. The movable member is arranged to move within each of the first soft magnet and the second soft magnet. Also the first permanent magnet, the second permanent magnet and/or the pole pieces may be hollow. According to one example, each of the first base section and the second base section comprises an outer cylindrical soft magnet, an inner cylindrical permanent magnet and two circular pole pieces attached to the respective ends of the soft magnet and the permanent magnet. In this case, the first coil is wound around the first soft magnet, the second coil is wound around the second soft magnet and the movable member may be guided within the first soft magnet, the first permanent magnet, the first pole pieces, the second soft magnet, the second permanent magnet, the second pole pieces, the first coil and the second coil. Each of the first base section and the second base section may thus be generally cylindrical.

The movable member is arranged to move to the first position relative to the first base section and the second base section due to a magnetic field generated by the second permanent magnet and the second soft magnet in combination and acting on the magnetic target section.

The actuator may comprise the two elastic elements as described above. Alternatively, the actuator does not need to comprise any elastic element for moving the movable member. In this case, the movable member may move from the second position to the first position only due to the magnetic field generated by the second permanent magnet and the second soft magnet in combination when the second soft magnet adopts the second polarity.

Furthermore, in this variant, the first soft magnet may be switched from the second polarity to the first polarity at the same time, or at substantially the same time, as the second soft magnet is switched from the first polarity to the second polarity.

According to a further aspect, there is provided a lock device comprising an actuator according to the present disclosure. When the actuator is used with a locking device, the actuator may constitute a blocking mechanism of the locking device. The actuator according to the present disclosure may replace many blocking mechanisms in conventional lock devices, for example blocking mechanisms driven by a solenoid, a motor or a voice coil.

According to one variant, the lock device is constituted by a lock cylinder. In this case, the lock cylinder may comprise a stationary structure and a cylinder core rotatably accommodated in the stationary structure, wherein the first position of the movable member constitutes a disconnecting position in which the cylinder core is allowed to rotate relative to the stationary structure, and wherein the second position of the movable member constitutes an interconnecting position in which the movable member engages both the cylinder core and the stationary structure such that the cylinder core is prevented from rotating relative to the stationary structure.

According to a further variant, the lock device is constituted by a lock case. In this case, the lock case may comprise a follower unit having a hub and a coupling device, wherein coupling device is movable under control of the actuator between an engaging position where two parts of the hub are engaged and a disengaging position where the two parts of the hub are disengaged.

According to a further aspect, there is provided a handle device for operating doors, windows and the like, comprising an actuator according to the present disclosure. In addition to the actuator, the handle device may comprise a first element rotatable about an axis, a second element rotatable about the axis, a coupling device movable under control of the actuator between an engaging position where the first element and the second element are engaged and a disengaging position where the first element and the second element are disengaged. The first element may be constituted by a handle grip or a boss and the second element may be constituted by a handle escutcheon or a cylindrical end section.

According to a further aspect, there is provided a method for operating an actuator according to claim 1. The method comprises providing the soft magnet with a first polarity such that a magnetic field outside the base section is substantially neutral; switching the polarity of the soft magnet from the first polarity to a second polarity such that the permanent magnet and the soft magnet combine to generate a magnetic field acting on the magnetic target section such that the movable member moves from a first position relative to the base section to a second position relative to the base section. The actuator for the method may be of any type according to the present disclosure.

In case the method is used with an actuator comprising a first permanent magnet and a first soft magnet arranged in a first base section and a second permanent magnet and a second soft magnet arranged in a second base section, the method may further comprise providing the first soft magnet with a first polarity such that a magnetic field outside the first base section is substantially neutral; switching the polarity of the first soft magnet from the first polarity to a second polarity such that the first permanent magnet and the first soft magnet combine to generate a magnetic field acting on the magnetic target section and such that the movable member moves from a first position relative to the first base section and the second base section to a second position relative to the first base section and the second base section. The method may further comprise switching the second soft magnet from a second polarity to a first polarity, at substantially the same time as the first soft magnet is switched from the first polarity to the second polarity, such that a magnetic field outside the second base section is substantially neutral.

The method may further comprise switching the polarity of the second soft magnet from the first polarity to the second polarity such that the second permanent magnet and the second soft magnet combine to generate a magnetic field acting on the magnetic target section and such that the movable member moves from the second position relative to the first base section and the second base section to the first position relative to the first base section and the second base section. The method may further comprise switching the first soft magnet from the second polarity to the first polarity, at substantially the same time as the second soft magnet is switched from the first polarity to the second polarity, such that a magnetic field outside the first base section is substantially neutral.

### Brief Description of the Drawings

Further details, advantages and aspects of the present disclosure will become apparent from the following embodiments taken in conjunction with the drawings, wherein:
- Fig. 1a:: schematically represents a side view of an actuator in a first position;
- Fig. 1b:: schematically represents a side view of the actuator in Fig. 1a in a second position;
- Fig. 2a:: schematically represents a side view of a further actuator in a first position;
- Fig. 2b:: schematically represents a side view of the actuator in Fig. 2a in a second position;
- Fig. 3a:: schematically represents a side view of a lock device comprising an actuator in a first position;
- Fig. 3b:: schematically represents a side view of the lock device in Fig. 3a and the actuator in a second position;
- Fig. 4:: schematically represents a perspective exploded view of a further lock device comprising an actuator;
- Fig. 5:: schematically represents a side view of a handle device comprising an actuator;
- Fig. 6a:: schematically represents a cross sectional side view of the handle device in Fig. 5 and the actuator in a first position; and
- Fig. 6b:: schematically represents a cross sectional side view of the handle device in Figs. 5 and 6a and the actuator in a second position.

### Detailed Description

In the following, an actuator comprising a soft magnet and a movable member arranged to move between a first position and a second position, lock devices comprising the actuator, a handle device comprising the actuator and a method for operating the actuator, will be described. The same reference numerals will be used to denote the same or similar structural features.

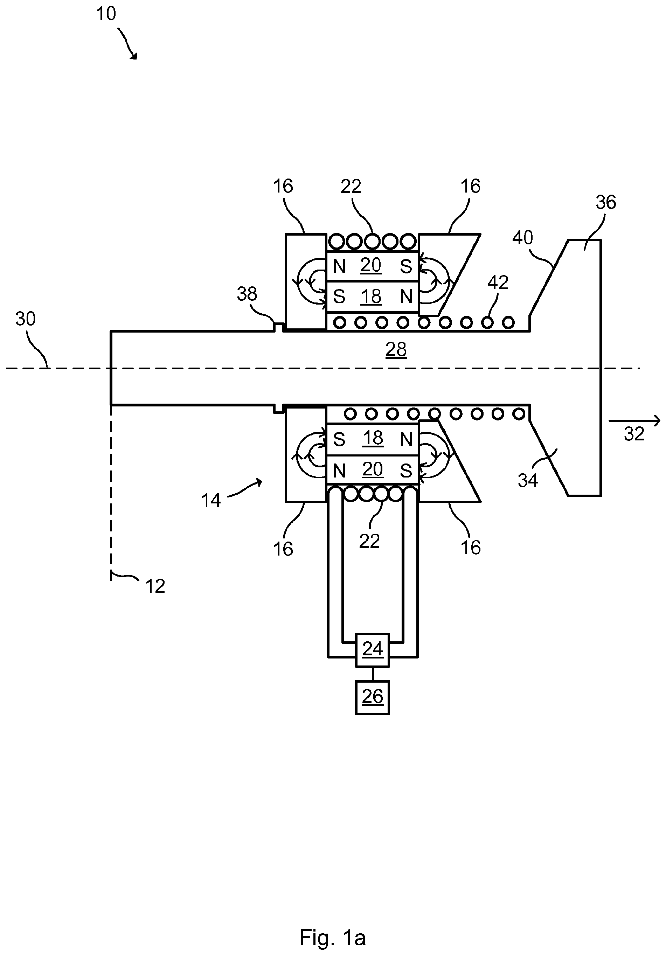

Fig. 1a schematically represents a side view of an actuator 10. In Fig. 1a, the actuator 10 is in a first position 12. The actuator 10 comprises a base section 14. The base section 14 comprises two pole pieces 16, a permanent magnet 18 and a soft magnet 20. The permanent magnet 18 and the soft magnet 20 are arranged between the two pole pieces 16. As shown in Fig. 1a, the soft magnet 20 is hollow. Also the permanent magnet 18 is hollow.

The permanent magnet 18 may for example comprise a Neodymium alloy and the soft magnet 20 may for example comprise an Alnico alloy. In Fig. 1a, the permanent magnet 18 and the soft magnet 20 have opposite polarities such that a magnetic field outside the base section 14 is substantially neutral.

The pole pieces 16 may for example be made of relay steel, such as Hiperco ^{®} alloy. At least the right pole piece 16 may have a smooth exterior surface to minimize air gaps.

A coil 22 is wound around the permanent magnet 18 and the soft magnet 20. The number of windings of the coil 22 may vary. The coil 22 may comprise copper wirings.

The actuator 10 further comprises a power controller 24. The power controller 24 is in this example powered by a battery 26. The power controller 24 is configured to apply current pulses to the coil 22 such that magnetic fields are generated. The power controller 24 may comprise switches, a pulse control transistor and a flyback diode for protecting the pulse control transistor. The battery 26 may provide a high power voltage supply (e.g. maximum 60 V and maximum 20 A). Alternatively, the power controller 24 may be connected to a charged capacitor optimized for the specific pulse for the soft magnet 20.

The actuator 10 further comprises a movable member 28. The movable member 28 of this example is arranged to move linearly along a movement axis 30. In Fig. 1a, the movable member 28 has moved in a first direction 32 along the movement axis 30 to the illustrated first position 12.

In this example, the pole pieces 16, the permanent magnet 18, the soft magnet 20 and thus the entire base section 14 are cylindrical. The movable member 28 is guided within the cylindrical base section 14.

The movable member 28 comprises an elongated portion and a head portion 34. The head portion 34 comprises a magnetic target section 36 of a material strongly responsive to magnetic fields. The movable member 28 further comprises a first mechanical stop 38, here implemented as a collar on the elongated portion and a second mechanical stop 40, here constituted by an inclined surface on the head portion 34.

The actuator 10 further comprises a resetting element 42. In this example, the resetting element 42 is constituted by an elastic element in the form of a spring connected between the base section 14 and the movable member 28 and encircling the movable member 28. The resetting element 42 pushes the movable member 28 in the first direction 32 such that the first mechanical stop 38 engages the base section 14, more specifically the left pole piece 16 of the base section 14.

By applying a current pulse to the coil 22 of sufficient duration and level, a magnetic field is generated that switches the polarity of the soft magnet 20 from a first polarity to a second polarity but that does not switch the polarity of the permanent magnet 18, which has a higher coercivity. The thresholds of the magnetic fields where the soft magnet 20 is flipped/switches polarity and where the permanent magnet 18 is flipped, depends on the coercivity of the respective material.

The applied current pulse may for example have a duration of between 30 µs to 750 µs, such as between 50 µs to 450 µs, such as between 75 µs to 300 µs, such as 100 µs to 200 µs, such as 150 µs. Several current pulses may for example be spaced 10 ms in time. The power supply voltage may for example be 10 V to 40 V, such as 20 V to 30 V.

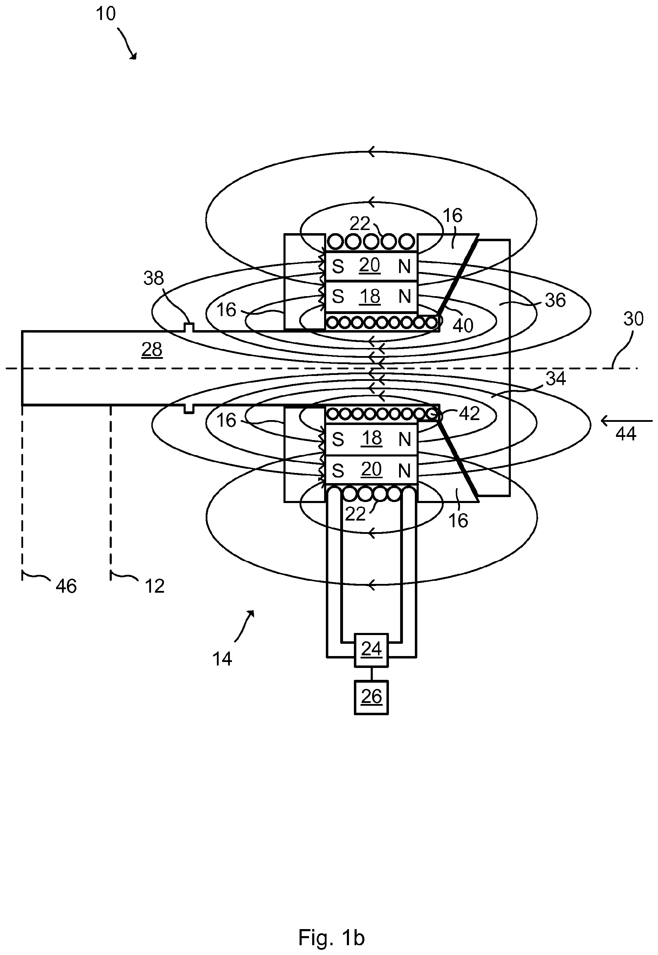

Fig. 1b schematically represents a side view of the actuator 10 in Fig. 1a. As illustrated in Fig. 1b, when the soft magnet 20 has been flipped from the first polarity in Fig. 1a to the second polarity in Fig. 1b, the permanent magnet 18 and the soft magnet 20 combine to generate a magnetic field outside the base section 14. This magnetic field acts on the magnetic target section 36 and pulls the movable member 28 in a second direction 44 linearly along the movement axis 30 to a second position 46. The movable member 28 moves within the soft magnet 20. At the same time, the resetting element 42 is further compressed until the second mechanical stop 40 contacts the right pole piece 16 of the base section 14. The movable member 28 is maintained in the second position 46 due to the magnetic force generated by the permanent magnet 18 and the soft magnet 20 in combination until the polarity of the soft magnet 20 is switched again. The right surface of the right pole piece 16 is also inclined such that a tight mating is provided between the second mechanical stop 40 and the base section 14.

Since electric power is supplied only for a short time when flipping the polarity of the soft magnet 20, it is possible to save energy while ensuring safety and reliability. In addition, since electric power is supplied only when flipping the polarity of the soft magnet 20, there is no temperature rise. This prevents heat from being generated from the actuator 10.

By applying a current pulse in the the coil 22 of sufficient duration and level in a reverse direction, the polarity of the soft magnet 20 can be switched from the second polarity to the first polarity. As a consequence, the magnetic field outside the base section 14 is again substantially neutral and the resetting element 42 pushes the movable member 28 in the first direction 32 back to the first position 12 in Fig. 1a where the first mechanical stop 38 contacts the base section 14.

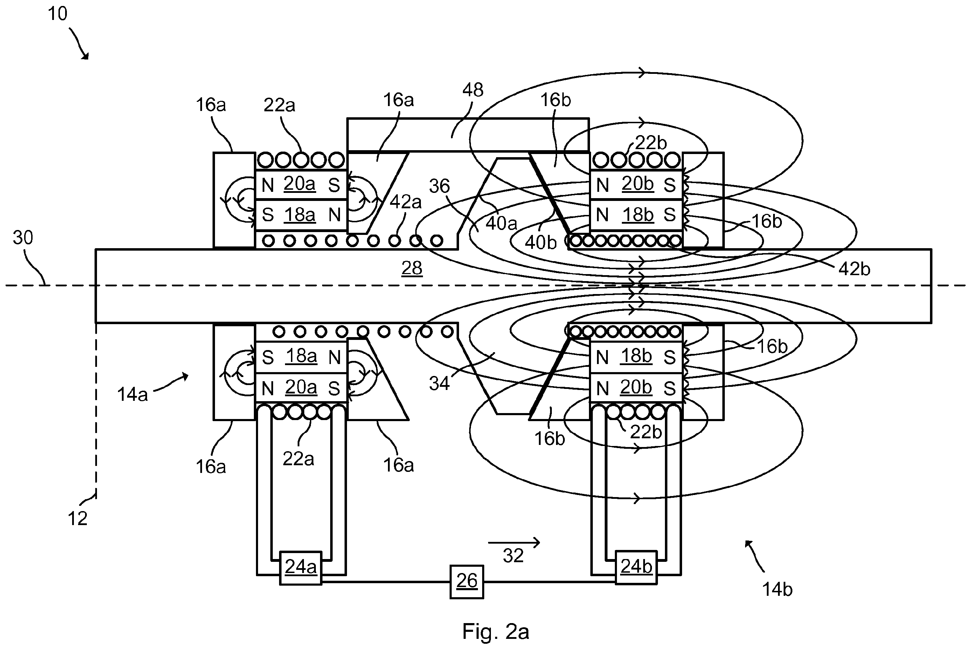

Fig. 2a schematically represents a side view of a further actuator 10. Mainly differences with respect to Figs. 1a and 1b will be described. In Fig. 2a, the actuator 10 is in a first position 12.

The actuator 10 in Fig. 2a comprises a first base section 14a and a second base section 14b. The first base section 14a and the second base section 14b are fixed relative to each other. In the example in Fig. 2a, the first base section 14a and the second base section 14b are connected by means of a connecting member 48.

The first base section 14a comprises two first pole pieces 16a, a first permanent magnet 18a and a first soft magnet 20a and the second base section 14b comprises two second pole pieces 16b, a second permanent magnet 18b and a second soft magnet 20b. The first permanent magnet 18a and the first soft magnet 20a are arranged between the two first pole pieces 16a and the second permanent magnet 18b and the second soft magnet 20b are arranged between the two second pole pieces 16b. In this example, each of the first base section 14a and the second base section 14b is cylindrical. As shown in Fig. 2a, each of the soft magnets 20a, 20b is hollow. Also each of the permanent magnets 18a, 18b is hollow.

The movable member 28 in Fig. 2a comprises a two elongated portions and a head portion 34 therebetween. Similar to Figs. 1a and 1b, the head portion 34 comprises the magnetic target section 36.

The movable member 28 in Fig. 2a comprises a first mechanical stop 40a and a second mechanical stop 40b. In this example, each of the first mechanical stop 40a and the second mechanical stop 40b is constituted by an inclined surface on the head portion 34.

A first coil 22a is wound around the first permanent magnet 18a and the first soft magnet 20a and a second coil 22b is wound around the second permanent magnet 18b and the second soft magnet 20b. The actuator 10 of the example in Fig. 2a comprises a first power controller 24a configured to apply current pulses to the first coil 22a and a second power controller 24b configured to apply current pulses to the second coil 22b. The first power controller 24a and the second power controller 24b are powered by a common battery 26.

The actuator 10 in Fig. 2a comprises a first resetting element 42a and a second resetting element 42b. In this example, each of the first resetting element 42a and the second resetting element 42b is constituted by an elastic element in the form of a spring. The first resetting element 42a is connected between the first base section 14a and the movable member 28 and the second resetting element 42b is connected between the second base section 14b and the movable member 28. The first resetting element 42a pushes the movable member 28 in the first direction 32 such that the second mechanical stop 40b engages the second base section 14, more specifically the left second pole piece 16b of the second base section 14b.

In the first position 12 of Fig. 2a, the first permanent magnet 18a and the first soft magnet 20a have opposite polarities such that a magnetic field outside the first base section 14a is substantially neutral. At the same time, the second permanent magnet 18b and the second soft magnet 20b are polarized in the same direction such that they combine to generate a magnetic field acting on the magnetic target section 36. This magnetic field holds the movable member 28 in the first position 12 illustrated in Fig. 2a.

In order to move the movable member 28 from the first position 12 in Fig. 2a, a current pulse of sufficient duration and level is applied to the first coil 22a such that a magnetic field is generated that switches the polarity of the first soft magnet 20a from a first polarity to a second polarity but that does not switch the polarity of the first permanent magnet 18a, which has a higher coercivity. At the same time, a current pulse of sufficient duration and level is applied to the second coil 22b such that a magnetic field is generated that switches the polarity of the second soft magnet 20b from a second polarity to a first polarity but that does not switch the polarity of the second permanent magnet 18b, which has higher coercivity.

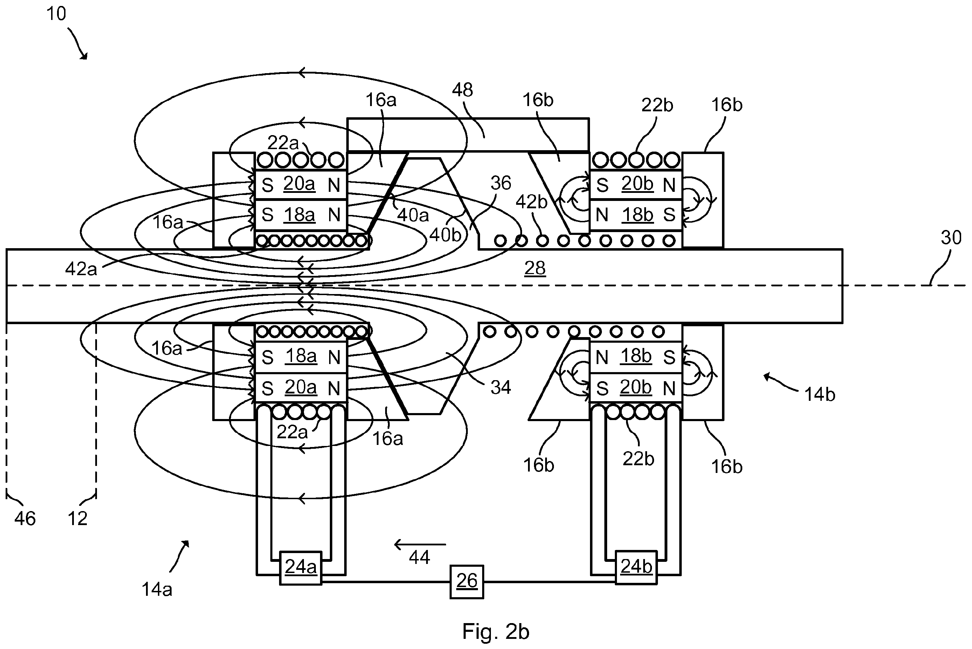

Fig. 2b schematically represents a side view of the actuator 10 in Fig. 2a. As illustrated in Fig. 2b, when the first soft magnet 20a has been flipped from the first polarity in Fig. 2a to the second polarity in Fig. 2b, the first permanent magnet 18 and the first soft magnet 20 combine to generate a magnetic field outside the first base section 14.

At the same time, when the second soft magnet 20b has been flipped from the second polarity in Fig. 2a to the first polarity in Fig. 2b, the second soft magnet 20b and the second permanent magnet 18b are oppositely polarized such that a magnetic field outside the second base section 14b is substantially neutral. The magnetic field generated by the first permanent magnet 18a and the first soft magnet 20a in combination acts on the magnetic target section 36 and pulls the movable member 28 in the second direction 44 linearly along the movement axis 30 to the second position 46. The movable member 28 moves within the soft magnets 20a, 20b. At the same time, the first resetting element 42a is further compressed and the second resetting element 42b is slightly released until the second mechanical stop 40b contacts the right first pole piece 16a of the first base section 14a.

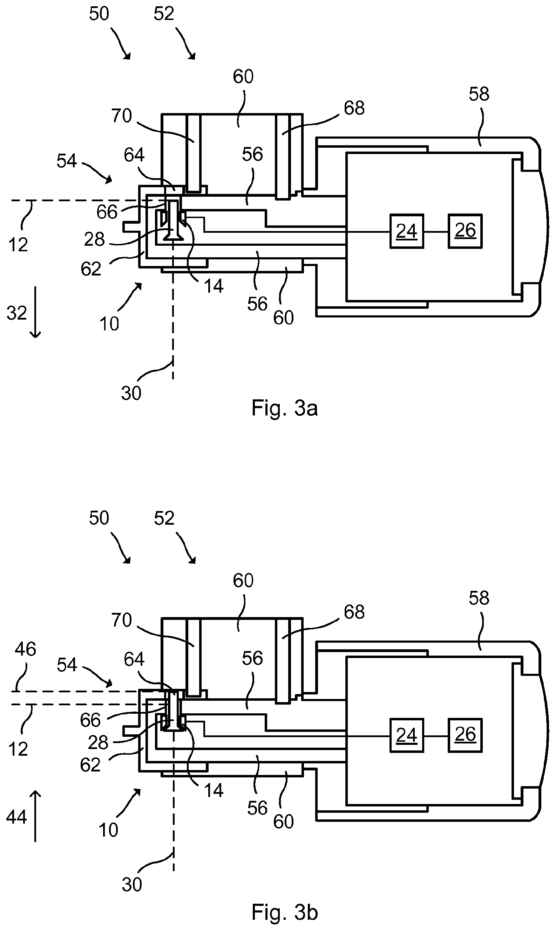

Fig. 3a schematically represents a side view of one example of a lock device 50 comprising an actuator 10. In Fig. 3a, the actuator 10 is of the type illustrated in Figs. 1a and 1b but the variant in Figs. 2a and 2b, or other variants according to the present disclosure may alternatively be employed.

The lock device 50 in Fig. 3a is constituted by a lock cylinder 52. The lock cylinder 52 comprises a stationary structure 54, a cylinder core 56 rotatably accommodated in the stationary structure 54 and a knob 58 connected to the cylinder core 56. In this example, the stationary structure 54 comprises a cylinder housing 60 and a tailpiece 62. A stationary radial hole 64 is provided in the cylinder housing 60 and a cylinder radial hole 66 is provided in the cylinder core 56.

The cylinder core 56 is axially fixed by means of a cylinder lock pin 68 engaging a circumferential groove on the cylinder core 56. The tailpiece 62 is axially fixed by means of a tailpiece lock pin 70 engaging a circumferential groove on the tailpiece 62.

The base section 14 and the movable member 28 of the actuator 10 are arranged within the cylinder core 56 and the power controller 24 and the battery 26 are arranged within the knob 58. In Fig. 3a, the movable member 28 is in the first position 12 such that the actuator 10 adopts a disconnecting position. In the disconnecting position of Fig. 3a, the cylinder core 56 is allowed to rotate relative to the stationary structure 54 since the movable member 28 is not protruding into the stationary radial hole 64.

Fig. 3b schematically represents a side view of the lock device 50 in Fig. 3a. In Fig. 3b, the movable member 28 has moved from the first position 12 to the second position 46 such that the actuator 10 adopts an interconnecting position. In the interconnecting position of Fig. 3b, the movable member 28 engages both the cylinder core 56 and the stationary structure 54. The cylinder core 56 is prevented from rotating relative to the stationary structure 54 since the movable member 28 protrudes through the cylinder radial hole 66 and into the stationary radial hole 64.

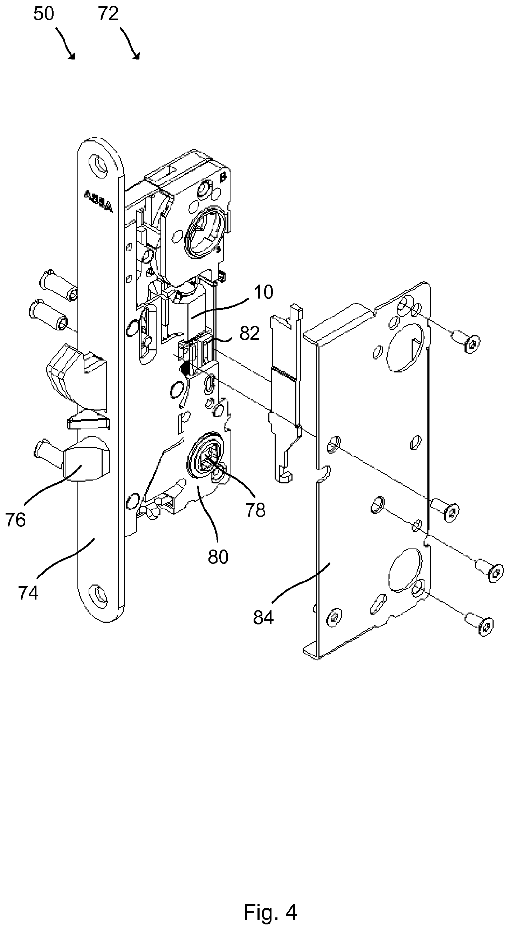

Fig. 4 schematically represents a perspective exploded view of a further lock device 50 comprising an actuator 10 according to the present disclosure. The lock device 50 in Fig. 4 is constituted by a lock case 72.

The lock case 72 of the example in Fig. 4 comprises a forend 74, a latch bolt 76, a hub 78, a lever handle follower unit 80, a coupling device 82 and a cover plate 84. The hub 78 has a hub axis and is adapted to receive at least one lever handle pin. The hub 78 comprises an outer hub part rotatable about the hub axis and which is adapted to receive a first lever handle pin, and an intermediate hub part rotatable about the hub axis and coupled to a bolt in the lock device 50 for movement of the bolt between an outer and an inner end position. The coupling device 82 is movable under control of the actuator 10. By moving the actuator 10 to the first position 12, the coupling device 82 is moved to a coupling position, in which the intermediate hub part rotates together with the outer hub part. By moving the actuator 10 to the second position 46, the coupling device 82 is moved to a release position, in which the outer hub part rotates freely in relation to the intermediate hub part.

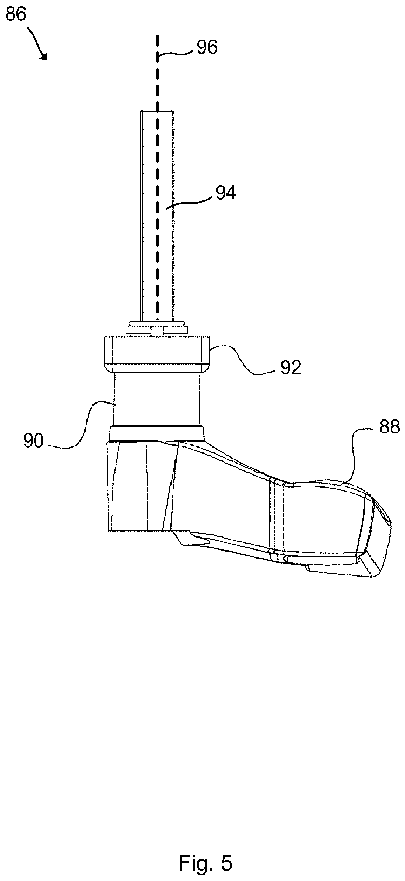

Fig. 5 schematically represents a side view of a handle device 86 for operating doors, windows and the like, comprising an actuator (not shown) according to Figs. 1a and 1b. The handle device 86 of this example comprises a handle grip 88, a handle neck 90, a handle escutcheon or handle plate 92 and a swivel pin or handle spindle 94 in the form of a square shank rotatable about a handle rotational axis 96.

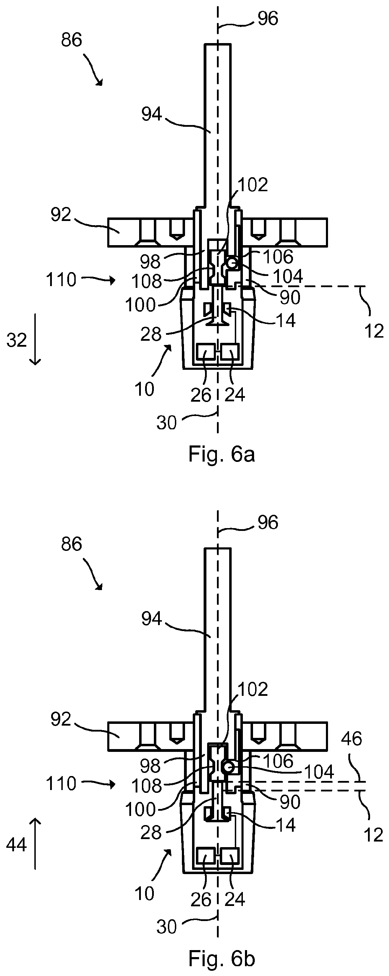

Fig. 6a schematically represents a cross sectional side view of the handle device 86 in Fig. 5. As shown in Fig. 6a, the handle device 86 of this example further comprises a cylindrical end section 98 which is firmly connected to the handle spindle 94. The cylindrical end section 98 is rotatably accommodated in a boss 100, which is in turn received in the handle neck 90.

The handle device 86 of this example further comprises an activating member 102 and an engaging member 104, here implemented as a ball. The activating member 102 is movable along the handle rotational axis 96 within the cylindrical end section 98. The engaging member 104 is movable in a radial hole 106 of the cylindrical end section 98. The activating member 102 comprises a waist section 108. The activating member 102, the engaging member 104, the cylindrical end section 98 and the boss 100 form a coupling device 110.

In Fig. 6a, the actuator 10, which is in a first position 12, can be seen. In the first position 12, the actuator 10 has adopted the first position 12 such that the activating member 102 has been pulled to a position where the waist section 108 of the activating member 102 is not aligned with the radial hole 106 of the cylindrical end section 98. Due to this movement of the activating member 102, the engaging member 104 is pushed out from the waist section 108 to a position where the engaging member 104 protrudes radially outwards from the cylindrical end section 98 and into the boss 100. The cylindrical end section 98 and the boss 100 are thereby simultaneously engaged by the engaging member 104. In this way, the handle grip 88 is coupled to the handle spindle 94 and can therefore be used to operate a tumbler, an espagnolette bolt or some other member or device to which the handle spindle 94 is coupled. Thus, when the actuator 10 adopts the first position 12, the coupling device 110 adopts an engaging position where a first element (the boss 100) and a second element (the cylindrical end section 98) are engaged.

Fig. 6b schematically represents a cross sectional side view of the handle device 86 in Figs. 5 and 6a. In Fig. 6b, the movable member 28 has pushed the activating member 102 to a position where the waist section 108 of the activating member 102 is aligned with the radial hole 106 of the cylindrical end section 98. As a consequence, the engaging member 104 is pushed into the waist section 108 of the activating member 102 such that the engaging member 104 does not protrude out from the cylindrical end section 98.

If the handle grip 88 (see Fig. 5) is rotated, the handle neck 90 and the boss 100 also turn. However, the rotational movement is not transmitted to the handle spindle 94 the activating member 102 and the engaging member 104. The handle grip 88 is therefore disengaged from the handle spindle 94 such that the handle grip 88 is allowed to turn freely in relation to the handle spindle 94, thereby enabling a disengaged state of the handle device 86, a so-called free-swiveling function. In this position, it is therefore not possible, by means of the handle grip 88, to operate a tumbler, an espagnolette bolt or any other device to which the handle spindle 94 may be coupled. Thus, when the actuator 10 adopts the second position 46, the coupling device 110 adopts a disengaging position where the first element (the boss 100) and the second element (the cylindrical end section 98) are disengaged.

While the present disclosure has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

## Claims

1. Actuator (10) comprising:
- a base section (14);
- a permanent magnet (18) arranged in the base section (14);
- a soft magnet (20) arranged in the base section (14), the soft magnet (20) being configured to switch a polarity between a first polarity and a second polarity when being subjected to a magnetic field and configured to maintain the polarity when the magnetic field is removed;
- a coil (22) located around the soft magnet (20);
- a power controller (24) configured to apply a current pulse to the coil (22, 22a, 22b) to generate the magnetic field for changing the polarization of the soft magnet (20); and
- a movable member (28) comprising at least one magnetic target section (36), the movable member (28) being arranged to move to a first position (12) relative to the base section (14), when the soft magnet (20) adopts the first polarity, and arranged to move to a second position (46) relative to the base section (14) due to a magnetic field generated by the permanent magnet (18) and the soft magnet (20) in combination and acting on the magnetic target section (36), when the soft magnet (20) adopts the second polarity;
**characterized in that** the soft magnet (20) is hollow and the movable member (28) is arranged to move within the soft magnet (20); and wherein the actuator (10) further comprises a resetting element (42) configured to move the movable member (28) to the first position (12) when the soft magnet (20) adopts the first polarity, or wherein the movable member (28) is arranged to be forced towards the first position (12) by means of gravity.

2. The actuator (10) according to claim 1, wherein the resetting element (42) is constituted by an elastic element and wherein the actuator (10) is configured such that the magnetic field, generated by the permanent magnet (18) and the soft magnet (20) in combination and acting on the magnetic target section (36) when the soft magnet (20) adopts the second polarity, moves the movable member (28) to the second position (46) and deforms the elastic element.

3. The actuator (10) according to any of the preceding claims, further comprising a first mechanical stop (38, 40b) defining the first position (12) of the movable member (28) relative to the base section (14).

4. The actuator (10) according to any of the preceding claims, further comprising a second mechanical stop (40, 40a) defining the second position (46) of the movable member (28) relative to the base section (14).

5. The actuator (10) according to any of the preceding claims, wherein the movable member (28) is arranged to move substantially linearly relative to the base section (14) between the first position (12) and the second position (46).

6. The actuator (10) according to any of the preceding claims, wherein a magnetic field outside the base section (14) is substantially neutral when the soft magnet (20) adopts the first polarity.

7. The actuator (10) according to any of the preceding claims, wherein the permanent magnet (18) and the soft magnet (20) are polarized in the same direction when the soft magnet (20) adopts the second polarity.

8. Actuator (10) comprising:
- a first base section (14a) and a second base section (14b);
- a first permanent magnet (18a) arranged in the first base section (14a) and a second permanent magnet (18b) arranged in the second base section (14b);
- a first soft magnet (20a) arranged in the first base section (14a) configured to switch a polarity between a first polarity and a second polarity when being subjected to a magnetic field and configured to maintain the polarity when the magnetic field is removed, and a second soft magnet (20b) arranged in the second base section (14b) and configured to switch a polarity between a first polarity and a second polarity when being subjected to a magnetic field and configured to maintain the polarity when the magnetic field is removed;
- a first coil (22a) wound around the first soft magnet (20a) and a second coil (22b) wound around the second soft magnet (20b);
- a first power controller (24a) configured to apply a current pulse to the first coil (22a) to generate the magnetic field for changing the polarization of the first soft magnet (20a) and a second power controller (24b) configured to apply a current pulse to the second coil (22b) to generate the magnetic field for changing the polarization of the second soft magnet (20b), or a power controller (24; 24a, 24b) configured to apply a current pulse to the first coil (22a) to generate the magnetic field for changing the polarization of the first soft magnet (20a) and configured to apply a current pulse to the second coil (22b) to generate the magnetic field for changing the polarization of the second soft magnet (20b); and
- a movable member (28) comprising a magnetic target section (36), the movable member (28) being arranged to move to a first position (12) relative to the first base section (14a) and the second base section (14b) when the first soft magnet (20a) adopts the first polarity and due to a magnetic field generated by the second permanent magnet (18b) and the second soft magnet (20b) in combination and acting on the magnetic target section (36), when the second soft magnet (20b) adopts the second polarity, and arranged to move to a second position (46) relative to the first base section (14a) and the second base section (14b) when the second soft magnet (20b) adopts the first polarity and due to a magnetic field generated by the first permanent magnet (18a) and the first soft magnet (20a) in combination and acting on the magnetic target section (36), when the first soft magnet (20a) adopts the second polarity;
wherein each of the first soft magnet (20a) and the second soft magnet (20b) is hollow and the movable member (28) is arranged to move within each of the first soft magnet (20a) and the second soft magnet (20b).

9. Lock device (50) comprising an actuator (10) according to any of the preceding claims.

10. The lock device (50) according to claim 9, wherein the lock device (50) is constituted by a lock cylinder (52) comprising a stationary structure (54) and a cylinder core (56) rotatably accommodated in the stationary structure (54), wherein the first position (12) of the movable member (28) constitutes a disconnecting position in which the cylinder core (56) is allowed to rotate relative to the stationary structure (54), and wherein the second position (46) of the movable member (28) constitutes an interconnecting position in which the movable member (28) engages both the cylinder core (56) and the stationary structure (54) such that the cylinder core (56) is prevented from rotating relative to the stationary structure (54).

11. The lock device (50) according to claim 9, wherein the lock device (50) is constituted by a lock case (72) comprising a follower unit (80) having a hub (78) and a coupling device (82), wherein coupling device (82) is movable under control of the actuator (10) between an engaging position where two parts of the hub (78) are engaged and a disengaging position where the two parts of the hub (78) are disengaged.

12. Handle device (86) for operating doors or windows, the handle device (86) comprising an actuator (10) according to any of claims 1 to 8, a first element rotatable about an axis, a second element rotatable about the axis, a coupling device (110) movable under control of the actuator (10) between an engaging position where the first element and the second element are engaged and a disengaging position where the first element and the second element are disengaged.

13. Method for operating an actuator (10) according to claim 1, the method comprising:
- providing the soft magnet (20) with the first polarity such that a magnetic field outside the base section (14) is substantially neutral; and
- switching the polarity of the soft magnet (20) from the first polarity to the second polarity such that the permanent magnet (18) and the soft magnet (20) combine to generate a magnetic field acting on the magnetic target section (36) such that the movable member (28) moves within the soft magnet (20) from a first position (12) relative to the base section (14) to a second position (46) relative to the base section (14).

## Patentansprüche

1. Betätigungsvorrichtung (10), umfassend:
- einen Basisabschnitt (14);
- einen in dem Basisabschnitt (14) angeordneten Permanentmagneten (18);
- einen in dem Basisabschnitt (14) angeordneten Weichmagneten (20), wobei der Weichmagnet konfiguriert ist, um eine Polarität zwischen einer ersten Polarität und einer zweiten Polarität umzuschalten, wenn er einem Magnetfeld ausgesetzt wird, und konfiguriert ist, um die Polarität beizubehalten, wenn das Magnetfeld entfernt wird;
- eine Spule (22), die sich rund um den Weichmagneten (20) befindet;
- eine Leistungssteuereinheit (24), die konfiguriert ist, um einen Stromimpuls an die Spule (22, 22a, 22b) anzulegen, um das Magnetfeld zum Ändern der Polarität des Weichmagneten (20) zu erzeugen; und
- ein bewegbares Element (28), das mindestens einen magnetischen Zielabschnitt (36) umfasst, wobei das bewegbare Element (28) angeordnet ist, um sich in eine Position (12) in Bezug zum Basisabschnitt (14) zu bewegen, wenn der Weichmagnet (20) die erste Polarität annimmt, und angeordnet ist, um sich aufgrund eines Magnetfelds, das durch den Permanentmagneten (18) und den Weichmagneten (20) in Kombination erzeugt wird, und auf den magnetischen Zielabschnitt (36) einwirkt, in eine zweite Position (46) in Bezug zum Basisabschnitt (14) zu bewegen, wenn der Weichmagnet (20) die zweite Polarität annimmt;
**dadurch gekennzeichnet, dass** der Weichmagnet (20) hohl ist und das bewegbare Element (28) angeordnet ist, um sich innerhalb des Weichmagneten (20) zu bewegen; und wobei die Betätigungsvorrichtung (10) weiter ein Rückstellelement (42) umfasst, das konfiguriert ist, um das bewegbare Element (28) in die erste Position (12) zu bewegen, wenn der Weichmagnet (20) die erste Polarität annimmt, oder wobei das bewegbare Element (28) angeordnet ist, um mittels Schwerkraft in Richtung der ersten Position (12) gezwungen zu werden.

2. Betätigungsvorrichtung (10) nach Anspruch 1, wobei das Rückstellelement (42) aus einem elastischen Element besteht und wobei die Betätigungsvorrichtung (10) konfiguriert ist, sodass das durch den Permanentmagneten (18) und den Weichmagneten (20) in Kombination erzeugte und auf den magnetischen Zielabschnitt (36) einwirkende Magnetfeld, wenn der Weichmagnet (20) die zweite Polarität annimmt, das bewegbare Element (28) in die zweite Position (46) bewegt und das elastische Element verformt.

3. Betätigungsvorrichtung (10) nach einem der vorstehenden Ansprüche, die weiter einen ersten mechanischen Anschlag (38, 40b) umfasst, der die erste Position (12) des bewegbaren Elements (28) in Bezug zum Basisabschnitt (14) definiert.

4. Betätigungsvorrichtung (10) nach einem der vorstehenden Ansprüche, der weiter einen zweiten mechanischen Anschlag (40, 40a) umfasst, der die zweite Position (46) des bewegbaren Elements (28) in Bezug zum Basisabschnitt (14) definiert.

5. Betätigungsvorrichtung (10) nach einem der vorstehenden Ansprüche, wobei das bewegbare Element (28) angeordnet ist, um sich im Wesentlichen linear in Bezug zum Basisabschnitt (14) zwischen der ersten Position (12) und der zweiten Position (46) zu bewegen.

6. Betätigungsvorrichtung (10) nach einem der vorstehenden Ansprüche, wobei ein Magnetfeld außerhalb des Basisabschnitts (14) im Wesentlichen neutral ist, wenn der Weichmagnet (20) die erste Polarität annimmt.

7. Betätigungsvorrichtung (10) nach einem der vorstehenden Ansprüche, wobei der Permanentmagnet (18) und der Weichmagnet (20) in der gleichen Richtung polarisiert sind, wenn der Weichmagnet (20) die zweite Polarität annimmt.

8. Betätigungsvorrichtung (10), umfassend:
- einen ersten Basisabschnitt (14a) und einen zweiten Basisabschnitt (14b);
- einen ersten Permanentmagneten (18a), der im ersten Basisabschnitt (14a) angeordnet ist, und einen zweiten Permanentmagneten (18b), der im zweiten Basisabschnitt (14b) angeordnet ist;
- einen ersten Weichmagneten (20a), der im ersten Basisabschnitt (14a) angeordnet ist, der konfiguriert ist, um, wenn er einem Magnetfeld ausgesetzt ist, eine Polarität zwischen einer ersten Polarität und einer zweiten Polarität umzuschalten und konfiguriert ist, um die Polarität beizubehalten, wenn das Magnetfeld entfernt wird, und einen zweiten Weichmagneten (20b), der im zweiten Basisabschnitt (14b) angeordnet ist und konfiguriert ist, um, wenn er einem Magnetfeld ausgesetzt ist, eine Polarität zwischen einer ersten Polarität und einer zweiten Polarität umzuschalten und konfiguriert ist, um die Polarität beizubehalten, wenn das Magnetfeld entfernt wird;
- eine erste Spule (22a), die rund um den ersten Weichmagneten (20a) gewickelt ist, und eine zweite Spule (22b), die rund um den zweiten Weichmagneten (20b) gewickelt ist;
- eine erste Leistungssteuereinheit (24a), die konfiguriert ist, um einen Stromimpuls an die erste Spule (22a) anzulegen, um das Magnetfeld zum Ändern der Polarisation des ersten Weichmagneten (20a) zu erzeugen, und eine zweite Leistungssteuereinheit (24b), die konfiguriert ist, um einen Stromimpuls an die zweite Spule (22b) anzulegen, um das Magnetfeld zum Ändern der Polarisation des zweiten Weichmagneten (20b) zu erzeugen, oder eine Leistungssteuereinheit (24; 24a, 24b), die konfiguriert ist, um einen Stromimpuls an die erste Spule (22a) anzulegen, um das Magnetfeld zum Ändern der Polarisation des ersten Weichmagneten (20a) zu erzeugen, und konfiguriert ist, um einen Stromimpuls an die zweite Spule (22b) anzulegen, um das Magnetfeld zum Ändern der Polarisation des zweiten Weichmagneten (20b) zu erzeugen; und
- ein bewegbares Element (28), das einen magnetischen Zielabschnitt (36) umfasst, wobei das bewegbare Element (28) angeordnet ist, um sich in eine erste Position (12) in Bezug zum ersten Basisabschnitt (14a) und dem zweiten Basisabschnitt (14b) zu bewegen, wenn der erste Weichmagnet (20a) die erste Polarität annimmt und aufgrund eines Magnetfelds, das durch den zweiten Permanentmagneten (18b) und den zweiten Weichmagneten (20b) in Kombination erzeugt wird und auf den magnetischen Zielabschnitt (36) einwirkt, wenn der zweite Weichmagnet (20b) die zweite Polarität annimmt, und angeordnet ist, um sich in eine zweite Position (46) in Bezug zum ersten Basisabschnitt (14a) und dem zweiten Basisabschnitt (14b) zu bewegen, wenn der zweite Weichmagnet (20b) die erste Polarität annimmt und aufgrund eines Magnetfelds, das durch den ersten Permanentmagneten (18a) und den ersten Weichmagneten (20a) in Kombination erzeugt wird und auf den magnetischen Zielabschnitt (36) einwirkt, wenn der erste Weichmagnet (20a) die zweite Polarität annimmt;
wobei jeder von dem ersten Weichmagneten (20a) und dem zweiten Weichmagneten (20b) hohl ist und das bewegbare Element (28) angeordnet ist, um sich innerhalb eines jeden vom ersten Weichmagneten (20a) und dem zweiten Weichmagneten (20b) zu bewegen.

9. Verriegelungsvorrichtung (50), die eine Betätigungsvorrichtung (10) nach einem der vorstehenden Ansprüche umfasst.

10. Verriegelungsvorrichtung (50) nach Anspruch 9, wobei die Verriegelungsvorrichtung (50) aus einem Verriegelungszylinder (52) besteht, der eine stationäre Struktur (54) und einen Zylinderkern (56) umfasst, der drehbar in der stationären Struktur (54) aufgenommen ist, wobei die erste Position (12) des bewegbaren Elements (28) eine Trennposition darstellt, in der es dem Zylinderkern (56) möglich ist, sich in Bezug zur stationären Struktur (54) zu drehen, und wobei die zweite Position (46) des bewegbaren Elements (28) eine Verbindungsposition darstellt, in der das bewegbare Element (28) mit sowohl dem Zylinderkern (56) als auch der stationären Struktur (54) in Eingriff steht, sodass der Zylinderkern (56) daran gehindert wird, sich in Bezug zur stationären Struktur (54) zu drehen.

11. Verriegelungsvorrichtung (50) nach Anspruch 9, wobei die Verriegelungsvorrichtung (50) aus einem Verriegelungsgehäuse (72) besteht, das eine Mitnehmereinheit (80) umfasst, die eine Nabe (78) und eine Kopplungsvorrichtung (82) aufweist, wobei die Kopplungsvorrichtung (82) unter Steuerung der Betätigungsvorrichtung (10) zwischen einer Eingriffsposition, in der zwei Teile der Nabe (78) in Eingriff stehen, und einer Freigabeposition, in der die beiden Teile der Nabe (78) freigegeben sind, bewegbar ist.

12. Griffvorrichtung (86) zum Bedienen von Türen oder Fenstern, wobei die Griffvorrichtung (86) eine Betätigungsvorrichtung (10) nach einem der Ansprüche 1 bis 8, ein um eine Achse drehbares erstes Element, ein um die Achse drehbares zweites Element und eine Kopplungsvorrichtung (110) umfasst, die unter Steuerung der Betätigungsvorrichtung (10) zwischen einer Eingriffsposition, in der das erste und das zweite Element in Eingriff stehen, und einer Freigabeposition, in der das erste und das zweite Element freigegeben sind, bewegbar ist.

13. Verfahren zum Betreiben einer Betätigungsvorrichtung (10) nach Anspruch 1, wobei das Verfahren umfasst:
- Bereitstellen des Weichmagneten (20) mit der ersten Polarität, sodass ein Magnetfeld außerhalb des Basisabschnitts (14) im Wesentlichen neutral ist; und
- Umschalten der Polarität des Weichmagneten (20) von der ersten Polarität auf die zweite Polarität, sodass sich der Permanentmagnet (18) und der Weichmagnet (20) zusammentun, um ein Magnetfeld zu erzeugen, das auf den magnetischen Zielabschnitt (36) einwirkt, sodass sich das bewegbare Element (28) innerhalb des Weichmagneten (20) von einer ersten Position (12) in Bezug zum Basisabschnitt (14) in eine zweite Position (46) in Bezug zum Basisabschnitt (14) bewegt.

## Revendications

1. Actionneur (10) comprenant :
- une section de base (14) ;
- un aimant permanent (18) agencé dans la section de base (14) ;
- un aimant doux (20) agencé dans la section de base (14), l'aimant doux (20) étant configuré pour commuter une polarité entre une première polarité et une seconde polarité lorsqu'il est soumis à un champ magnétique, et configuré pour maintenir la polarité lorsque le champ magnétique est supprimé ;
- une bobine (22) située autour de l'aimant doux (20) ;
- un dispositif de commande de puissance (24) configuré pour appliquer une impulsion de courant à la bobine (22, 22a, 22b) pour générer le champ magnétique afin de modifier la polarisation de l'aimant doux (20) ; et
- un élément mobile (28) comprenant au moins une section cible magnétique (36), l'élément mobile (28) étant conçu pour se déplacer vers une première position (12) par rapport à la section de base (14), lorsque l'aimant doux (20) adopte la première polarité, et agencé pour se déplacer vers une seconde position (46) par rapport à la section de base (14) en raison d'un champ magnétique généré par l'aimant permanent (18) et l'aimant doux (20) en combinaison et agissant sur la section cible magnétique (36) lorsque l'aimant doux (20) adopte la seconde polarité ;
**caractérisé en ce que** l'aimant doux (20) est creux et l'élément mobile (28) est conçu pour se déplacer à l'intérieur de l'aimant doux (20) ; et dans lequel l'actionneur (10) comprend en outre un élément de réinitialisation (42) configuré pour déplacer l'élément mobile (28) vers la première position (12) lorsque l'aimant doux (20) adopte la première polarité, ou dans lequel l'élément mobile (28) est agencé pour être forcé vers la première position (12) sous l'effet de la gravité.

2. Actionneur (10) selon la revendication 1, dans lequel l'élément de réinitialisation (42) est constitué d'un élément élastique et dans lequel l'actionneur (10) est configuré de sorte que le champ magnétique, généré par l'aimant permanent (18) et l'aimant doux (20) en combinaison et agissant sur la section cible magnétique (36) lorsque l'aimant doux (20) adopte la seconde polarité, déplace l'élément mobile (28) vers la seconde position (46) et déforme l'élément élastique.

3. Actionneur (10) selon l'une quelconque des revendications précédentes, comprenant en outre une première butée mécanique (38, 40b) définissant la première position (12) de l'élément mobile (28) par rapport à la section de base (14).

4. Actionneur (10) selon l'une quelconque des revendications précédentes, comprenant en outre une seconde butée mécanique (40, 40a) définissant la seconde position (46) de l'élément mobile (28) par rapport à la section de base (14).

5. Actionneur (10) selon l'une quelconque des revendications précédentes, dans lequel l'élément mobile (28) est agencé pour se déplacer sensiblement linéairement par rapport à la section de base (14) entre la première position (12) et la seconde position (46).

6. Actionneur (10) selon l'une quelconque des revendications précédentes, dans lequel un champ magnétique à l'extérieur de la section de base (14) est sensiblement neutre lorsque l'aimant doux (20) adopte la première polarité.

7. Actionneur (10) selon l'une quelconque des revendications précédentes, dans lequel l'aimant permanent (18) et l'aimant doux (20) sont polarisés dans la même direction lorsque l'aimant doux (20) adopte la seconde polarité.

8. Actionneur (10) comprenant :
- une première section de base (14a) et une seconde section de base (14b) ;
- un premier aimant permanent (18a) agencé dans la première section de base (14a) et un second aimant permanent (18b) agencé dans la seconde section de base (14b) ;
- un premier aimant doux (20a) agencé dans la première section de base (14a) configuré pour commuter une polarité entre une première polarité et une seconde polarité lorsqu'il est soumis à un champ magnétique et configuré pour maintenir la polarité lorsque le champ magnétique est supprimé, et un second aimant doux (20b) agencé dans la seconde section de base (14b) et configuré pour commuter une polarité entre une première polarité et une seconde polarité lorsqu'il est soumis à un champ magnétique et configuré pour maintenir la polarité lorsque le champ magnétique est supprimé ;
- une première bobine (22a) enroulée autour du premier aimant doux (20a) et une seconde bobine (22b) enroulée autour du second aimant doux (20b) ;
- un premier dispositif de commande de puissance (24a) configuré pour appliquer une impulsion de courant à la première bobine (22a) afin de générer le champ magnétique permettant de modifier la polarisation du premier aimant doux (20a) et un second dispositif de commande de puissance (24b) configuré pour appliquer une impulsion de courant à la seconde bobine (22b) afin de générer le champ magnétique permettant de modifier la polarisation du second aimant doux (20b), ou un dispositif de commande de puissance (24 ; 24a, 24b) configuré pour appliquer une impulsion de courant à la première bobine (22a) afin de générer le champ magnétique permettant de modifier la polarisation du premier aimant doux (20a) et configuré pour appliquer une impulsion de courant à la seconde bobine (22b) afin de générer le champ magnétique permettant de modifier la polarisation du second aimant doux (20b) ; et
- un élément mobile (28) comprenant une section cible magnétique (36), l'élément mobile (28) étant agencé pour se déplacer vers une première position (12) par rapport à la première section de base (14a) et à la seconde section de base (14b) lorsque le premier aimant doux (20a) adopte la première polarité et en raison d'un champ magnétique généré par le second aimant permanent (18b) et le second aimant doux (20b) en combinaison et agissant sur la section cible magnétique (36), lorsque le second aimant doux (20b) adopte la seconde polarité, et conçu pour se déplacer vers une seconde position (46) par rapport à la première section de base (14a) et à la seconde section de base (14b) lorsque le second aimant doux (20b) adopte la première polarité et en raison d'un champ magnétique généré par le premier aimant permanent (18a) et le premier aimant doux (20a) en combinaison et agissant sur la section cible magnétique (36), lorsque le premier aimant doux (20a) adopte la seconde polarité ;
dans lequel chacun du premier aimant doux (20a) et du second aimant doux (20b) est creux et l'élément mobile (28) est agencé pour se déplacer à l'intérieur de chacun du premier aimant doux (20a) et du second aimant doux (20b).

9. Dispositif de verrouillage (50) comprenant un actionneur (10) selon l'une quelconque des revendications précédentes.

10. Dispositif de verrouillage (50) selon la revendication 9, dans lequel le dispositif de verrouillage (50) est constitué d'un barillet de serrure (52) comprenant une structure fixe (54) et une partie centrale (56) de barillet logée de manière rotative dans la structure fixe (54), dans lequel la première position (12) de l'élément mobile (28) constitue une position de déconnexion dans laquelle la partie centrale (56) de barillet peut tourner par rapport à la structure fixe (54), et dans lequel la seconde position (46) de l'élément mobile (28) constitue une position d'interconnexion dans laquelle l'élément mobile (28) vient à la fois en prise avec la partie centrale (56) de barillet et la structure fixe (54) de sorte que la partie centrale (56) de barillet ne puisse pas tourner par rapport à la structure fixe (54).

11. Dispositif de verrouillage (50) selon la revendication 9, dans lequel le dispositif de verrouillage (50) est constitué d'un boîtier de verrouillage (72) comprenant une unité suiveuse (80) présentant un moyeu (78) et un dispositif de couplage (82), dans lequel le dispositif de couplage (82) est mobile sous la commande de l'actionneur (10) entre une position de mise en prise où deux parties du moyeu (78) sont en prise et une position de désolidarisation où les deux parties du moyeu (78) sont désolidarisées.

12. Dispositif de poignée (86) pour actionner des portes ou des fenêtres, le dispositif de poignée (86) comprenant un actionneur (10) selon l'une quelconque des revendications 1 à 8, un premier élément rotatif autour d'un axe, un second élément rotatif autour de l'axe, un dispositif de couplage (110) mobile sous la commande de l'actionneur (10) entre une position de mise en prise où le premier élément et le second élément sont en prise et une position de désolidarisation où le premier élément et le second élément sont désolidarisés.

13. Procédé de fonctionnement d'un actionneur (10) selon la revendication 1, le procédé comprenant :
- l'application de la première polarité à l'aimant doux (20) de sorte qu'un champ magnétique à l'extérieur de la section de base (14) soit sensiblement neutre ; et
- la commutation de la polarité de l'aimant doux (20) de la première polarité à la seconde polarité de sorte que l'aimant permanent (18) et l'aimant doux (20) se combinent pour générer un champ magnétique agissant sur la section cible magnétique (36) de sorte que l'élément mobile (28) se déplace à l'intérieur de l'aimant doux (20) d'une première position (12) par rapport à la section de base (14) à une seconde position (46) par rapport à la section de base (14).
